# EUROPEAN PATENT APPLICATION

(11) **EP 4 550 767 A1**
(43) Date of publication of application: **07.05.2025**
(21) Application number: 23852739.4
(22) Date of filing: 28.06.2023
(51) Int. Cl.: H04M 1/72448, H04M 1/72403, H04M 1/72469, G06F 3/14, G06F 3/04842, G06F 3/041, G06F 3/04883, G06F 3/0484

(54) **MULTI-WINDOW CONTROL METHOD OF ELECTRONIC DEVICE AND SAME ELECTRONIC DEVICE**

(30) Priority: 09.08.2022 KR 20220099492; 11.10.2022 KR 20220129353
(71) Applicant: Samsung Electronics Co., Ltd., Suwon-si, Gyeonggi-do 16677 (KR)
(72) Inventor: HA, Taebong, Suwon-si, Gyeonggi-do 16677 (KR); CHO, Chihyun, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR)
(74) Representative: Walaski, Jan Filip
(86) International application number: PCT/KR2023/009055
(87) International publication number: WO 2024/034852

(57) **Abstract**

An electronic device disclosed in the present document may comprise a housing, a display mounted in the housing, a sensor module, and a processor operatively connected to the display and the sensor module. The processor may: display a multi-window including multiple windows by partitioning a screen of the display; identify the state of the electronic device on the basis of a sensor value of the sensor module; display an object for selecting one of the multiple windows in a designated area of the screen of the display on the basis of the state of the electronic device; identify whether a first window of the multiple windows is selected through the object displayed on the designated area; identify whether the first window is selected and an application switching function is selected; provide a second window including a selectable object for executing at least one application on the display if the application switching function is selected; execute an application corresponding to the specific object displayed on the second window in response to selection of a specific object; and display the application execution screen on the selected first window.

## Description

### [Technical Field]

Various embodiments disclosed in this document relate to multi-window control of an electronic device, for example, to display control of multi-windows in an electronic device.

### [Background Art]

With the development of technology, the need to provide various information simultaneously using electronic devices is increasing. For example, electronic devices may execute a multi-window function that partitions the display into multiple windows and provides information individually to each window.

The above information is presented as background information only to assist with an understanding of the disclosure. No determination has been made, and no assertion is made, as to whether any of the above might be applicable as prior art with regard to the disclosure

### [Disclosure of Invention]

### [Technical Solution]

An electronic device may individually control each window of the multi-window provided through the display.

According to various embodiments disclosed in the present document, an electronic device may include a housing, a display mounted in the housing, a sensor module, and a processor operatively connected to the display and the sensor module, wherein the processor is configured to: display a multi-window including multiple windows by partitioning the display screen; identify a state of the electronic device on the basis of a sensor value of the sensor module; display an object for selecting one of the multiple windows on a designated area of the display screen on the basis of the state of the electronic device; identify whether a first window of the multiple windows is selected through the object displayed on the designated area; identify whether the first window is selected and an application switching function is selected; provide a second window including a selectable object for executing at least one application on the display if the application switching function is selected; execute an application corresponding to the specific object displayed on the second window in response to selection of a specific object; and display the application execution screen on the selected first window.

A method of an electronic device according to various embodiments disclosed in the present document may include: displaying a multi-window including multiple windows by partitioning a display screen of the electronic device; identifying a state of the electronic device on the basis of a sensor value of a sensor module of the electronic device; displaying an object for selecting one of the multiple windows on a designated area of the display screen on the basis of the state of the electronic device; identifying whether a first window among the multiple windows is selected through the object displayed on the designated area; identifying whether the first window is selected and an application switching function is selected; providing a second window including a selectable object for executing at least one application on the display if the application switching function is selected; executing an application corresponding to the specific object displayed on the second window in response to selection of the specific object; and displaying the application execution screen on the selected first window.

According to various embodiments, a user interface may be provided that can individually control each window of a multi-window provided through a display of an electronic device.

In addition, various effects may be provided that are directly or indirectly identified through this document.

The technical problems, technical features, and effects to be achieved in the present disclosure are not limited to the technical problems, technical features, and effects mentioned above, and other technical problems, technical features, and effects not mentioned will be clearly understood by a person having ordinary skill in the technical field to which the present invention pertains from the description below.

### [Brief Description of Drawings]

In connection with the description of the drawings, the same or similar reference numerals may be used for identical or similar components.
FIG. 1 is a block diagram of an electronic device in a network environment according to various embodiments.
FIG. 2 is a block diagram of an electronic device according to various embodiments.
FIG. 3 illustrates examples of form factors of electronic devices according to various embodiments.
FIG. 4 illustrates an external appearance of a foldable electronic device according to various embodiments.
FIG. 5 illustrates examples of multi-windows of an electronic device according to various embodiments.
FIG. 6 is a diagram illustrating a multi-window control of an electronic device according to various embodiments.
FIG. 7 is a diagram illustrating a flex state of an electronic device according to various embodiments.
FIG. 8 is a diagram illustrating a multi-window control in a flex state of an electronic device according to various embodiments.
FIG. 9a to FIG. 9c are diagrams illustrating a multi-window control in a flex state of an electronic device according to various embodiments.
FIG. 10 is a diagram illustrating a multi-window control in a flex state of an electronic device according to various embodiments.
FIG. **11** is a diagram illustrating a pop-up window including selectable objects for executing an application of an electronic device according to various embodiments.
FIG. 12 is a diagram illustrating a multi-window control of an electronic device according to various embodiments.
FIG. 13 is a flowchart illustrating a multi-window control operation of an electronic device according to various embodiments.

### [Mode for the Invention]

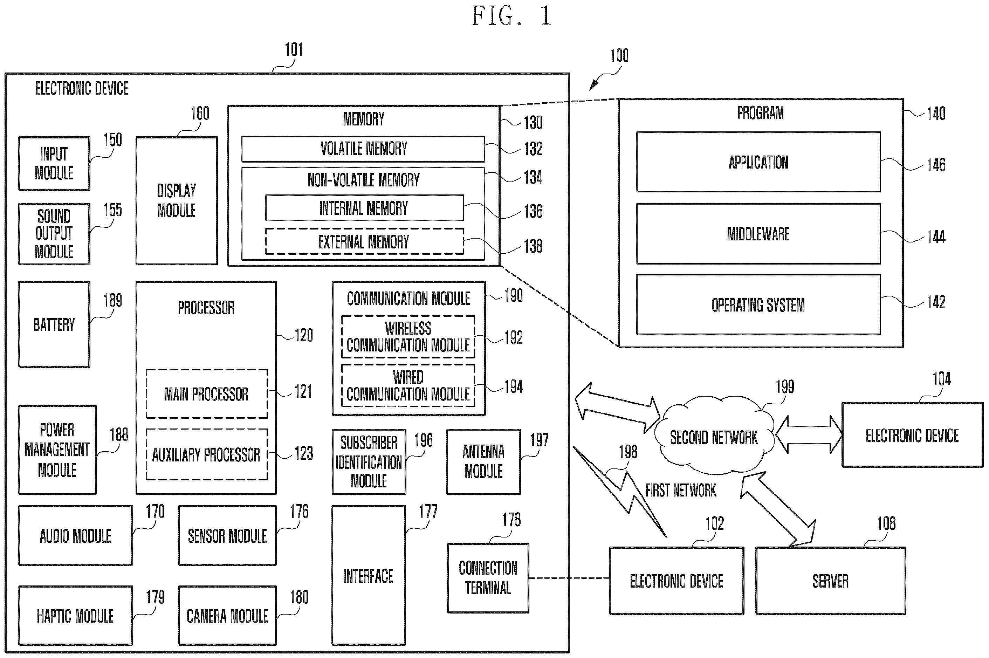

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wired) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wired) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

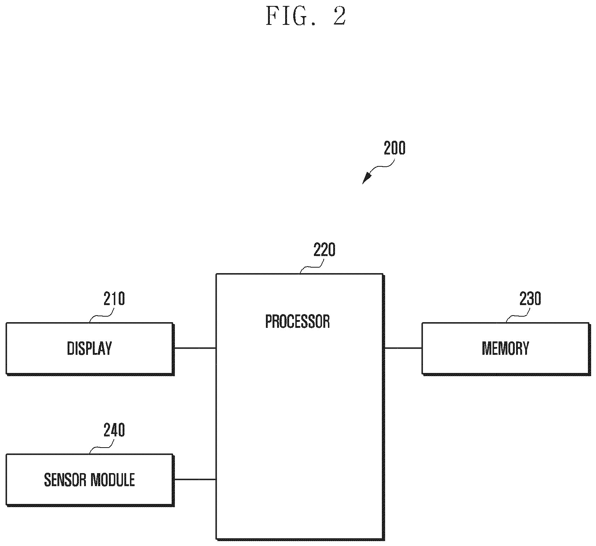

FIG. 2 is a block diagram of an electronic device according to various embodiments.

With reference to FIG. 2, an electronic device 200 (e.g., the electronic device 101 of FIG. 1) may include a display 210 (e.g., the display module 160 and input module 150 of FIG. 1), a processor 220 (e.g., the processor 120 of FIG. 1), a memory 230 (e.g., the memory 130 of FIG. 1), and/or a sensor module 220 (e.g., the sensor module 176 of FIG. 1). The electronic device 200 may include at least some of the configurations and/or functions of the electronic device 101 of FIG. 1.

According to one embodiment, the display 210 may display a screen corresponding to one or more applications (or programs) executed by the user. For example, when two or more applications are executed simultaneously, the display 210 may partition the screen within the display 210 into multiple areas and display windows corresponding to the execution screens of the two or more applications in each of the partitioned areas.

According to one embodiment, the display 210 may be configured with at least one of a liquid crystal display (LCD), a thin film transistor LCD (TFT-LCD), an organic light emitting diodes (OLED), a light emitting diode (LED), an active matrix organic LED (AMOLED), a flexible display, and a 3-dimensional display. In addition, some of these displays may be configured as transparent or light-transmitting so that the outside may be viewed therethrough. This may be configured in the form of a transparent display including a transparent OLED (TOLED). Hereinafter, the display is referred to as a flexible display 210, but the display according to various embodiments is not limited thereto. The flexible display 210 according to one embodiment may include at least some of the structures and/or functions of the display module 160 of FIG. 1.

According to one embodiment, the flexible display 210 may visually provide information to the outside of the electronic device 200. The flexible display 210 may include a touch screen that detects a touch or hovering input. The flexible display 210 may include at least a part of the configuration and/or function of the display module 160 of FIG. 1 and may include at least a part of the configuration and/or function of the input module 150 of FIG. 1. The flexible display 210 of the electronic device 200 may include a structure capable of changing shape according to movement or deformation of a housing of the electronic device 200.

According to one embodiment, the electronic device 200 may include a structure in which the flexible display 210 may be folded or bent, and is not limited in a specific manner. For example, the electronic device 200 may be in-folding and/or out-folding in terms of folding manner, and may be folded up and down and/or left and right with respect to a folding axis, and may include one or more folding axes.

According to one embodiment, the electronic device 200 may include a structure in which the flexible display 210 may be rolled (e.g., slid), but is not limited in a specific manner. For example, a portion of the flexible display 210 of the electronic device 200 may be rolled or folded inside the housing and may be unfolded left and right or up and down through at least one roller structure.

According to one embodiment, the flexible display 210 may be the main display of the electronic device 200 and may be located on the front surface or rear surface of the housing of the electronic device 200.

According to one embodiment, the flexible display 210 may be an auxiliary display of the electronic device and may be located on the front surface or rear surface of the housing of the electronic device 200.

According to one embodiment, the processor 220 is a configuration capable of controlling components of the electronic device 200 and/or performing operations or data processing on the display 210, and may include at least some of the configurations and/or functions of the processor 120 of FIG. 1. The processor 220 may be functionally, operatively, and/or electrically connected to internal components of the electronic device 200, including the flexible display 210 and the sensor module 240.

According to one embodiment, the memory 230 may include known volatile memory and non-volatile memory and is not limited in specific implementation examples. The memory 230 may include at least a part of the configuration and/or function of the memory 130 of FIG. 1. In addition, the memory 230 may store at least a part of the program 140 of FIG. 1.

In one embodiment, the memory 230 is functionally, operatively, and/or electrically connected to the processor 220 and may store various instructions that may be performed by the processor 220 when executed. Such instructions may include various control commands including arithmetic and logical operations, data movement, and/or input/output that may be recognized by the processor 220.

According to one embodiment, the sensor module 240 may generate sensor values for identifying the state (e.g., shape and/or posture) of the electronic device 200.

According to one embodiment, the shape of the electronic device 200 may be a shape formed by a housing of the electronic device 200 equipped with a flexible display 210. The shape of the flexible display 210 may be changed depending on the shape formed by the housing of the electronic device 200. The shape of the electronic device 200 may be, for example, a shape formed by the flexible display 210 depending on movement or deformation of the housing of the electronic device 200.

According to one embodiment, the posture of the electronic device 200 may be, for example, a direction and/or angle formed by the electronic device 200. The posture of the electronic device 200 may be understood as an angle and/or phase with respect to the direction of gravity of the electronic device 200 or some component of the electronic device 200.

According to one embodiment, the sensor module 240 may include various sensors for detecting a state (e.g., shape and/or posture) of the electronic device 200. For example, the sensor module 240 may include various sensors such as an angle sensor (not shown), a magnetic sensor (not shown), a gravity sensor (not shown), an acceleration sensor (not shown), and/or a gyro sensor (not shown) that may detect an unfolded/folded state (e.g., a foldable display), a folding angle, a rolling state (e.g., a slidable display), a rolling degree, and/or a posture (e.g., an angle and/or phase with respect to a gravity direction of at least one housing) of the electronic device 200. The sensor module 240 may be located inside and/or on one side of the housing of the electronic device 200 or within a hinge.

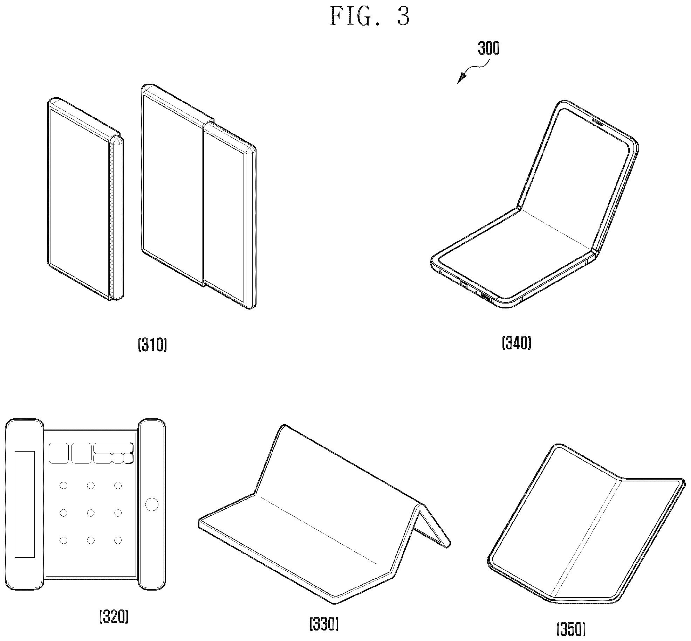

FIG. 3 is a diagram illustrating a form factor of an electronic device according to various embodiments.

With reference to FIG. 3, an electronic device 300 according to various embodiments (e.g., the electronic device 101 of FIG. 1 or the electronic device 200 of FIG. 2) may be implemented with various forms of form factors (or housings). For example, the electronic device 300 may include at least one of a slidable electronic device 310, a rollable electronic device 320, a first foldable electronic device 330, a second foldable electronic device 340, and a third foldable electronic device 350. The various forms of form factors (or housings) illustrated in FIG. 3 are examples of form factors of the electronic device 300, and the form factor of the electronic device 300 is not limited thereto, and various types of form factors or modifications thereof may be possible.

According to one embodiment, the first foldable electronic device 330 may include at least two hinge structures, and the second foldable electronic device 340 and the third foldable electronic device 350 may include one hinge structure.

According to one embodiment, the first foldable electronic device 330, the second foldable electronic device 340, and the third foldable electronic device 350 are equipped with a foldable (or bendable) display (e.g., a foldable display or a flexible display) and may be used by folding or unfolding on the basis of a hinge structure.

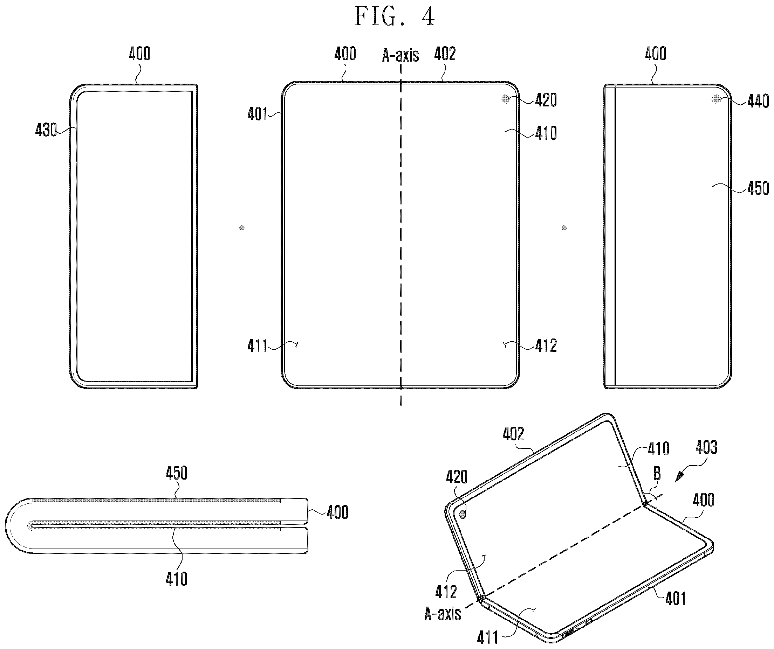

FIG. 4 is an example of structural and shape changes of an electronic device having a flexible display according to various embodiments.

With reference to FIG. 4, the electronic device 400 (e.g., the electronic device 200 of FIG. 2) may be a foldable electronic device. According to various embodiments, the display 410 of the electronic device 400 may include at least some of the structures and/or functions of the display module 160 of FIG. 1.

The foldable electronic device 400 according to various embodiments may include two housings (e.g., a first housing 401 and a second housing 402) on the basis of a folding axis (e.g., an A-axis), a flexible display 410 (e.g., the display module 160 of FIG. 1, the first display), a front camera 420 (e.g., the camera module 180 of FIG. 1), an auxiliary display 430 (e.g., the display module 160 of FIG. 1, the second display), and a rear camera 440 (e.g., the camera module 180 of FIG. 1) and may include at least a portion of the structure and/or function of the electronic device 101 of FIG. 1. The two housings may be covered by a hinge structure and may be folded and overlapped around at least one axis.

According to one embodiment, among the two housings constituting the housing of the electronic device 400, the first housing 401 may include a first surface and a second surface, and the second housing 402 may include a third surface and a fourth surface. For example, the form in which the display 410 of the electronic device 400 is folded with respect to the A-axis may be a form in which the first surface of the first housing 401 and the third surface of the second housing 402 face each other and are covered. Here, the form in which the electronic device 400 is folded may be a form in which the angle (e.g., angle B) formed by the first surface of the first housing 401 and the third surface of the second housing 402 forms a narrow angle (e.g., 0 to 5 degrees). For example, the folded form of the electronic device 400 may include a closed state or a fully folded state. The display 410 may be partitioned into a first area 411 and a second area 412 as areas that are physically folded and partitioned, and the first area 411 may be located on the first surface of the first housing 401 and the second area 412 may be located on the third surface of the second housing 402. The first housing 401 and the second housing 402 may be disposed on both sides with respect to the folding axis (e.g., the A-axis) as the center, and may have an overall symmetrical shape with respect to the folding axis.

With reference to FIG. 4, the first housing 401 may be positioned on the left side with respect to the folding axis, and the second housing 402 may be positioned on the right side with respect to the folding axis. The first housing 401 and the second housing 402 may be designed to be folded relative to each other and may be overlapped such that the first surface of the first housing 401 and the third surface of the second housing 402 face each other in a folded form or a collapsed form.

According to various embodiments, a hinge may be formed between the first housing 401 and the second housing 402, so that the first housing 401 and the second housing 402 of the electronic device 400 may be folded over each other. However, the housing structure in which the electronic device 400 is disposed left and right on the basis of the folding axis is only an example, and the electronic device 400 may have a housing (e.g., the second foldable electronic device 340 of FIG. 3) disposed up and down on the basis of the folding axis.

According to one embodiment, the first housing 401 and the second housing 402 may have different angles (e.g., angle B) or distances between them depending on whether the electronic device 400 is in an unfolded state (or open state), a folded state (or closed state), or an intermediate state. The unfolded state of the display 410 may include an open state (opened state) or a flat state. For example, the unfolded state may include a state in which the first housing 401 and the second housing 402 of the electronic device 400 are disposed on the same plane at an angle of about 180 degrees so that the display 410 is exposed in a flat state.

According to one embodiment, the electronic device 400 may have an auxiliary display 430 (e.g., the display module 160 of FIG. 1) on at least a portion of the first housing 401 or the second housing 402. With reference to FIG. 4, the auxiliary display may be formed on at least a portion of the second surface of the first housing 401 of the electronic device 400. The auxiliary display 430 may also be disposed on a fourth surface of the second housing 402 and may be formed across a portion or all of the second surface of the first housing 401 and the fourth surface of the second housing 402. The auxiliary display may include at least a portion of the structure and/or function of the display module 160 of FIG. 1.

According to one embodiment, the form of the electronic device 400 may be an intermediate state, for example, a form in which the display 410 is in a partially open state (partially opened state) and the first housing 401 and the second housing 402 of the electronic device 400 are disposed at a specified angular range (e.g., 80 to 130 degrees) so that the display 410 is exposed. The intermediate state may be, for example, that an angle (e.g., angle B) formed by a first surface of the first housing 401 and a third surface of the second housing 402 is within a specified angular range (e.g., 80 to 130 degrees).

According to one embodiment, a processor (e.g., the processor 220 of FIG. 2) of an electronic device 400 may identify that the state of the electronic device 400 is a flex state 403 on the basis of a sensor value of a sensor module (e.g., the sensor module 240 of FIG. 2). For example, the flex state may mean a state in which the shape of the electronic device 400 is an intermediate shape described above, and the posture of the electronic device 400 is a posture in which one (e.g., the first housing 401) of the first housing 401 or the second housing 402 is substantially horizontal to a floor surface.

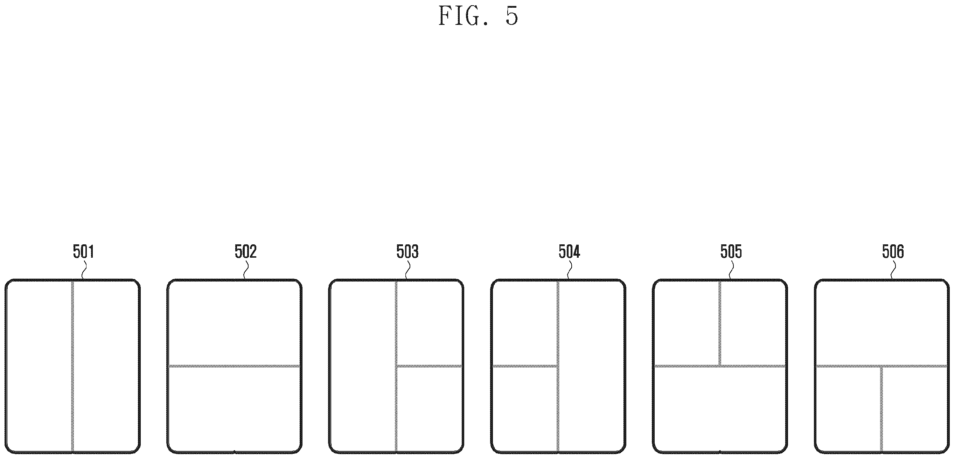

FIG. 5 illustrates examples of multi-windows of an electronic device according to various embodiments.

According to one embodiment, an electronic device (e.g., the electronic device 200 of FIG. 2, the electronic device 300 of FIG. 3, or the electronic device 400 of FIG. 4) may partition a display screen into multiple windows through a multi-window function and provide individual information through each of the multiple window screens. The multi-window screen may provide a variety of windows in various partition methods. For example, the screen 501 may display two multi-windows partitioned left and right, and the screen 502 may display two multi-windows partitioned top and bottom. For example, the screen 503 may display three multi-windows: a left window partitioned into left and right, a right window, and a right window further partitioned into top and bottom. For example, the screen 504 may display three multi-windows: a right window partitioned into left and right, a left window, and a left window further partitioned into top and bottom. For example, the screen 505 may display three multi-windows: a bottom window partitioned into top and bottom, a top window, and a top window further partitioned into left and right. For example, the screen 506 may display three multi-windows: a top window partitioned into top and bottom, a bottom window, and a bottom window further partitioned into left and right.

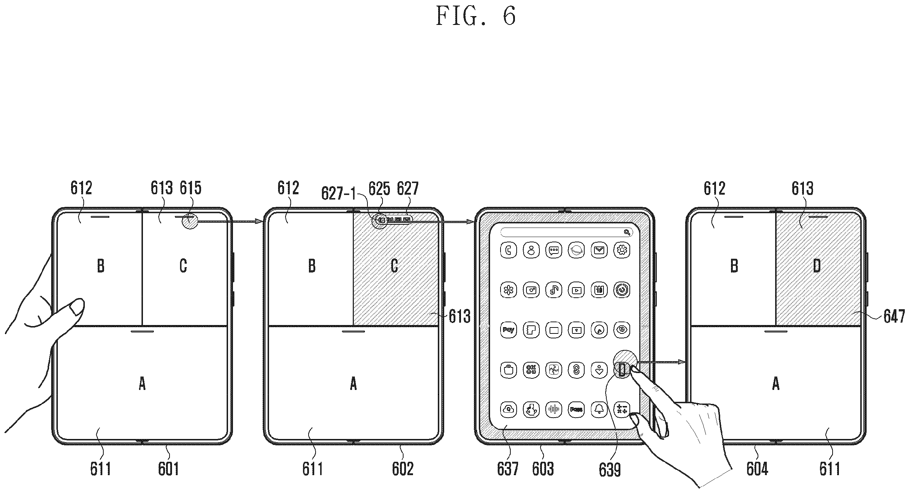

FIG. 6 is a diagram illustrating a multi-window control of an electronic device according to various embodiments.

With reference to FIG. 6, a processor (e.g., the processor 220 of FIG. 2) of an electronic device (e.g., the electronic device 200 of FIG. 2, the electronic device 300 of FIG. 3, or the electronic device 400 of FIG. 4) may display a multi-window configured to partition the entire screen of a display (e.g., the display 210 of FIG. 2 or the display 410 of FIG. 4) into multiple sub-screens and provide individual information through each sub-screen. For example, the electronic device may provide a multi-window composed of three sub-screens on a screen 601 of the display 410. For example, the electronic device may display a multi-window on the display 410 that is partitioned into three windows: a window 611, a window 612, and a window 613. For example, the window 611, the window 612, and the window 613 may display execution screens of application A, application B, and application C, respectively.

According to one embodiment, the processor 220 may control the display of a window according to a touch event corresponding to one of the multi-windows.

According to one embodiment, the processor 220 may provide a menu including at least one object for controlling an execution screen of an application displayed through a corresponding window according to a touch event corresponding to one of the multi-windows.

According to one embodiment, a touch event corresponding to any one of the multiple windows may include one or more touch (or hover) inputs to the corresponding window, one or more touch (or hover) inputs to a menu including an object for controlling the corresponding window, or a combination thereof.

According to one embodiment, the electronic device may receive a touch input 615 from a user on at least one area (e.g., the top) of a window 613 in a multi-window screen 601 as a touch event.

According to one embodiment, in response to receiving a touch input 615, the electronic device may display a control menu (e.g., a multi-window handler) 627 for the window 613 in at least one area (e.g., the top) of the window 613 as shown in the multi-window screen 602.

For example, the control menu 627 may include an application switching object 627-1. The application switching object 627-1 may be a visual object for switching the execution screen of an application provided through the corresponding window 613 to the execution screen of another application.

In one embodiment, the electronic device may activate (focus) the window 613 upon detecting a touch input 615 to the window 613. The focus may move in response to the touch input 615 to activate the selected window 613, thereby indicating that the window 613 is selected by a color, an effect, and/or a text. In addition, the color, the effect, and/or the text for the selected window 613 may also be applied to the control menu 627 to distinguish it from the control menu of unselected windows.

According to one embodiment, when the electronic device receives an input (e.g., a touch input) 625 for selecting an application switching object 627-1 from a control menu 627, the electronic device may display a window 637 including selectable objects (e.g., icons or folders) for executing various applications for application switching by the touch event, for example, in a pop-up form, overlapping with it on the multi-window screen 603. For example, the window 637 including selectable objects for executing various applications may include selectable objects that are the same as or similar to a home screen and may include a screen having the same or similar disposition structure. For example, the selectable objects displayed on the window 637 may be selectable objects that are the same as or similar to a home screen built by a user and may be provided with the same or similar disposition structure.

According to one embodiment, one object 639 among the selectable objects for executing various applications displayed in the window 637 may be selected by various touch input and/or hover input methods, such as touch input or drag and drop.

According to one embodiment, with reference to the multi-window screen 604, an application (e.g., the application D) corresponding to the selected object 639 may be executed and the executed application screen 647 may be displayed in a corresponding sub-window 613. Accordingly, an application (e.g., the application C) displayed in the sub-window 613 may be switched or changed to another application (e.g., the application D).

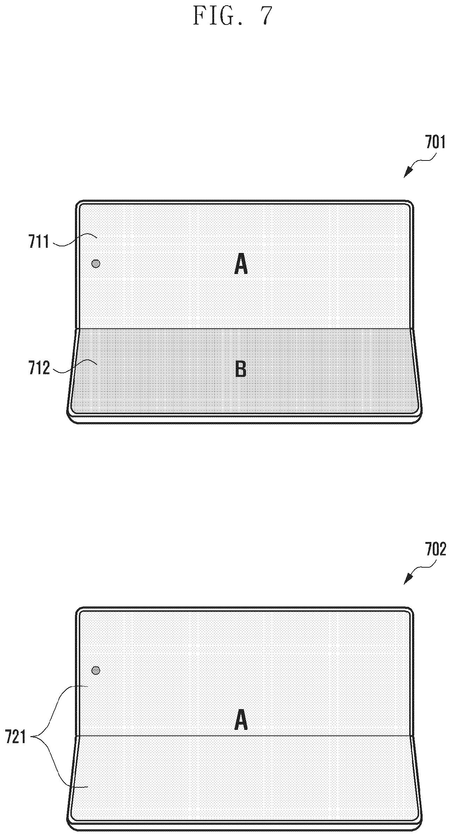

FIG. 7 is a diagram illustrating a flex state of an electronic device according to various embodiments.

According to one embodiment, a processor (e.g., the processor 220 of FIG. 2) of an electronic device (e.g., the electronic device 200 of FIG. 2, the electronic device 300 of FIG. 3, or the electronic device 400 of FIG. 4) may identify a state of the electronic device on the basis of a sensor value of a sensor module (e.g., the sensor module 240 of FIG. 2). For example, the state of the electronic device may be identified as a flex state (e.g., the flex state 403 of FIG. 4) on the basis of a sensor value of the sensor module 240.

According to one embodiment, the sensor module 240 may include various sensors for detecting a state (e.g., shape and/or posture) of the electronic device. For example, the sensor module 240 may include various sensors such as an angle sensor (not shown), a magnetic sensor (not shown), a gravity sensor (not shown), an acceleration sensor (not shown), and/or a gyro sensor (not shown) that may detect an unfolded/folded state (e.g., a foldable display), a folding angle, a rolling state (e.g., a slidable display), a rolling degree, and/or a posture (e.g., an angle and /or phase with respect to a gravity direction of at least one housing) of the electronic device.

The flex state may mean a state in which the form of the electronic device is an intermediate form, and the posture of the electronic device is a posture in which one (e.g., the first housing 401) of the two housings (e.g., the first housing 401 or the second housing 402 of FIG. 4) is substantially horizontal to the floor surface. The intermediate form may mean a form in which the two housings of the electronic device (e.g., the first housing 401 and the second housing 402 of FIG. 4) are disposed at a specified angular range (e.g., 80 degrees to 130 degrees) so that the display (e.g., the display 410 of FIG. 4) is exposed. With reference to FIG. 4 again, the intermediate form may mean that the angle (e.g., angle B) formed by the first surface of the first housing 401 and the third surface of the second housing 402 forms a specified angular range (e.g., 80 to 130 degrees).

According to one embodiment, the processor 220 of the electronic device may provide a user interface according to the flex mode through the display when the electronic device is identified to be in the flex state. For example, with reference to FIG. 7, the flex mode may include a function of separating the upper screen 711 and the lower screen 712 in the flex state identification symbol 701 drawing on the basis of the folding axis (e.g., the A axis of FIG. 4) to provide an application screen on the upper screen 711 and provide a control screen for the application provided on the upper screen 711 on the lower screen 712. For example, among applications running on the electronic device, an application that supports the flex mode according to application property information may provide the flex mode by separating the upper and lower screens as illustrated in the identification symbol 701 drawing when the electronic device is switched to the flex state. For example, among applications running on the electronic device, an application that does not support the flex mode according to application property information may provide an application execution screen through the entire screen as illustrated in the identification symbol 702 drawing even in the flex state.

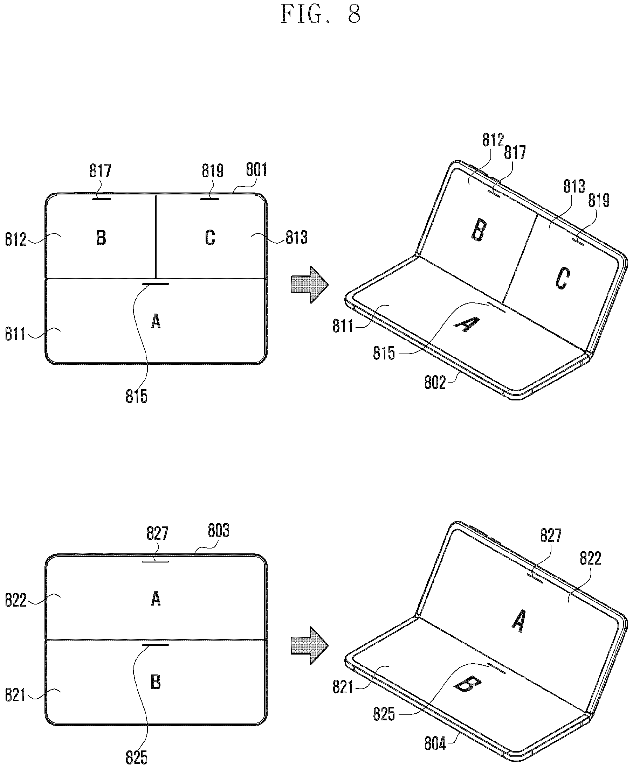

FIG. 8 is a diagram illustrating a multi-window control in a flex state of an electronic device according to various embodiments.

According to one embodiment, a processor (e.g., the processor 220 of FIG. 2) of an electronic device (e.g., the electronic device 200 of FIG. 2, the electronic device 300 of FIG. 3, or the electronic device 400 of FIG. 4) may identify whether the state of the electronic device is a flex state on the basis of a sensor value of a sensor module (e.g., the sensor module 240 of FIG. 2).

According to one embodiment, the processor 220 of the electronic device may provide a user interface function according to the flex state when the electronic device is identified to be in a flex state. For example, when the electronic device is providing a multi-window and it is identified to have switched to a flex state on the basis of a sensor value of a sensor module, the user interface function according to the flex state may be provided through the screen 802 or screen 804 of the flex state.

According to one embodiment, when the electronic device is in an unfolded state, the multi-window screen 801 may display two windows 812 and 813 at the top of the display of the electronic device and may separately display one window 811 at the bottom. According to one embodiment, the electronic device may provide control menus (e.g., multi-window handlers) 815, 817, and 819 for each of the bottom window 811, and the two top windows 812 and 813 of the multi-window screen 801 and/or 802 that include objects for controlling the individual windows separately through the corresponding windows 811, 812, and 813, respectively. For example, a window 812 may perform various control functions, including the ability to switch between applications running in that window 812 through a control menu 817 provided for that window 812.

According to one embodiment, when the electronic device is in an unfolded state, the multi-window screen 803 may display one window 821 at the bottom of the display of the electronic device and one window 822 at the top separately.

According to one embodiment, the electronic device may provide control menus (e.g., the multi-window handlers) 825 and 827 for each of the bottom window 821, and the top window 822 of the multi-window screen 803 and/or 804 that include objects for controlling the individual windows separately through the corresponding windows 821 and 822, respectively. For example, a window 822 may perform various control functions, including the ability to switch between applications running in the corresponding window 822 through a control menu 827 provided for the corresponding window 822.

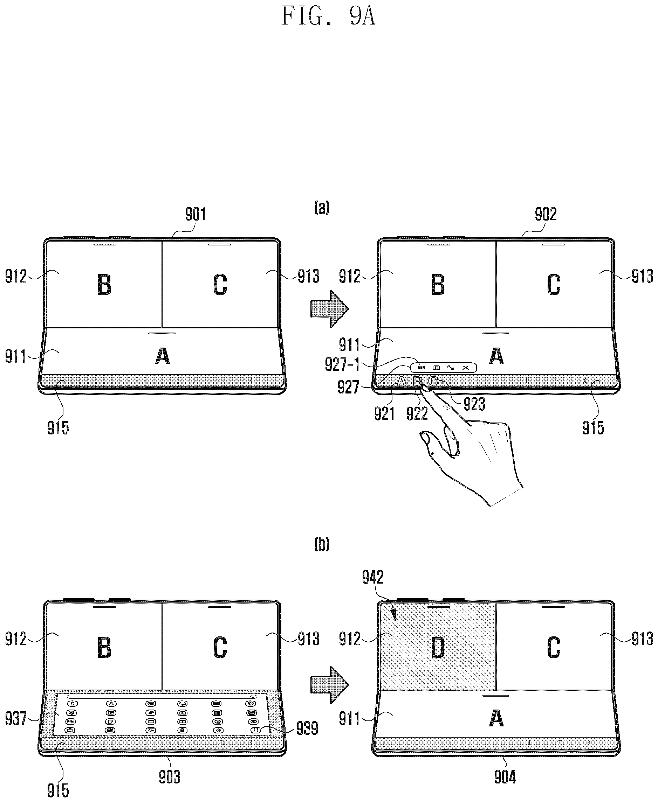

FIG. 9a to FIG. 9c are diagrams illustrating a multi-window control in a flex state of an electronic device according to various embodiments.

With reference to FIG. 9a, a processor (e.g., the processor 220 of FIG. 2) of an electronic device (e.g., the electronic device 200 of FIG. 2, the electronic device 300 of FIG. 3, or the electronic device 400 of FIG. 4) may display a multi-window configured to partition the entire screen of a display (e.g., the display 210 of FIG. 2 or the display 410 of FIG. 4) into multiple sub-screens and provide individual information through each sub-screen. For example, a screen 901 of a display may provide a multi-window composed of three sub-screens. For example, the display may display a multi-window partitioned into three: a window 911, a window 912, and a window 913.

According to one embodiment, the processor 220 may control the display of a window according to a touch event corresponding to one of the multi-windows.

According to one embodiment, the processor 220 may provide a menu including objects for controlling an application displayed in a corresponding window in response to a touch event corresponding to one of the multiple windows.

In one embodiment, a touch event corresponding to any one of the multiple windows may include one or more touch inputs to the corresponding window, one or more touch inputs to a menu for controlling the corresponding window, or a combination thereof.

According to one embodiment, the processor 220 of the electronic device may identify whether the state of the electronic device is a flex state on the basis of a sensor value of a sensor module (e.g., the sensor module 240 of FIG. 2).

According to one embodiment, the processor 220 of the electronic device may provide a user interface function according to the flex state when the state of the electronic device (e.g., the shape of the display and/or the posture of the electronic device) is identified to be a flex state. For example, when the electronic device is providing a multi-window and it is identified to have switched to a flex state on the basis of a sensor value of a sensor module, the user interface function according to the flex state may be provided through the screen 902 in the flex state.

According to one embodiment, when the electronic device is identified to be in a flex state, the multi-window screen 902 provided through the flex state display may provide a menu (e.g., an object 921, 922, and 923 including an individual window selection icon) for individually controlling each individual window for each of the lower window (the first window 911) folded in an intermediate form and the two upper windows (the second window 912 and the third window 913). For example, when the electronic device is identified to be in a flex state, an object 921, 922, and 923 including multiple individual window selection icons for individually selecting and/or controlling each of the multiple windows in a designated area of the flex state display may be provided.

An individual window selection icon 921, 922, and 923 for each of the three sub-windows 911, 912, and 913 provided by being partitioned according to the multi-window function may be provided through a designated display area, for example, an area at the bottom of the display, for example, at least one area (e.g., a task bar 915) overlapping with the sub-window 911 displayed at the bottom of the display. For example, a control function for the second window 912 may be provided by selecting an object 922 including an individual window selection icon for selecting the second window 912 among a control menu provided through at least one area overlapping with the first window 911 displayed at the bottom of the display. An object 921, 922, and 923 including an individual window selection icon for selecting each of the three sub-windows 911, 912, and 913 provided in a partitioned manner according to the multi-window function may be provided through another area at the bottom of the display, for example, at least another area at the bottom of the display that does not overlap with the sub-window 911 displayed at the bottom of the display. The task bar 915 may be provided in an unfolded state as well as in a flex state.

According to one embodiment, when another window (e.g., a second window 912) is selected through an individual window selection icon 922 provided in a specific area of the display (e.g., an area at the bottom of the display) for multiple windows of a multi-window screen 902, a control function for controlling the other window (e.g., the second window 912) may be executed.

According to one embodiment, in order to perform a control function for another window (e.g., a second window 912) among multiple windows of a multi-window screen 902, another window (e.g., the second window 912) may be selected through an object 922 including an individual window selection icon provided through a designated area, for example, an area other than the second window 912 (e.g., the area 915 at the bottom of the display).

In one embodiment, the processor 220 of the electronic device may, in response to selection of the selection icon 922, display a control menu (e.g., a multi-window handler) 927 for the selected window 912 in an area other than the selected window 912 (e.g., the area at the bottom of the display).

For example, the control menu 927 may include an application switching object 927-1. The application switching object 927-1 may be a visual object for switching the execution screen of an application provided through a selected window 912 to the execution screen of another application.

When the application switching object 927-1 is selected after the second window 912 is selected through the selection icon 922, as shown in the multi-window screen 903 of FIG. 9a, a list of various applications that can be switched through the execution screen of the selected second window 912 may be provided through the screen 937, for example, in a floating or pop-up manner.

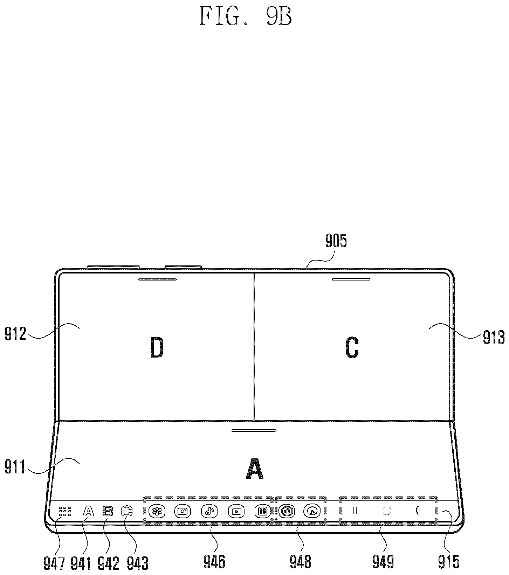

With reference to FIG. 9b, the multi-window screen 905 may provide an application switching object 947 in addition to selection icons 941, 942, and 943 for selecting one of the multi-windows through an area (e.g., the task bar 915) at the bottom of the display screen where a control menu is provided. The task bar 915 may provide application icons 946 fixedly disposed in a favorite form, recently executed application icons 948, and/or a navigation bar 949.

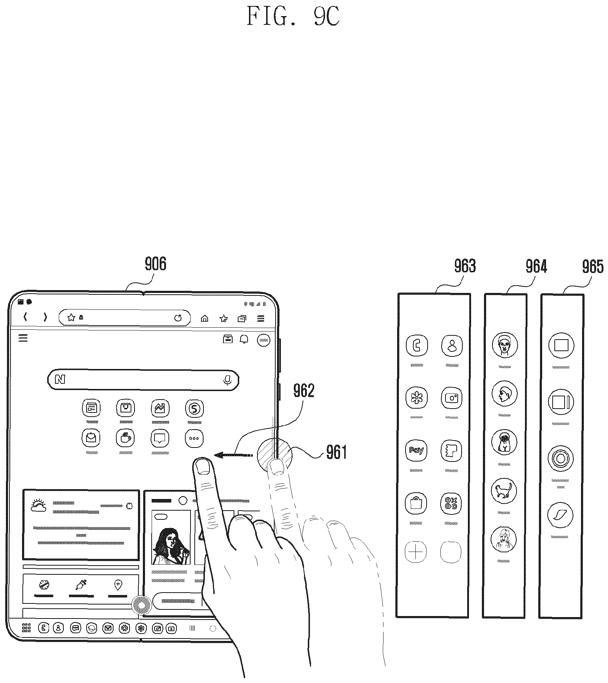

The task bar 915 of FIG. 9b is provided in one area of the display screen, and, for example, is different from an edge handle menu provided through a touch input to a specific area (e.g., an edge area) of the display screen. FIG. 9c may display an edge handle menu 963, 964, or 965 in response to a touch input to the edge area of the display screen (e.g., the sliding 962 following a touch 961 to the edge area). The edge handle menu 963, 964, or 965 may provide a specified number of objects, such as a specified number of application lists, and may be displayed through a touch input to the left or right edge of the display screen.

When the application switching object 947 is selected after the second window 912 is selected through the selection icon 942 in the multi-window screen 905 of FIG. 9b, a list of various applications that can be switched through the execution screen of the selected second window 912 as shown in the multi-window screen 903 of FIG. 9a may be provided, for example, in a pop-up manner, through the screen 937 located on the bottom surface.

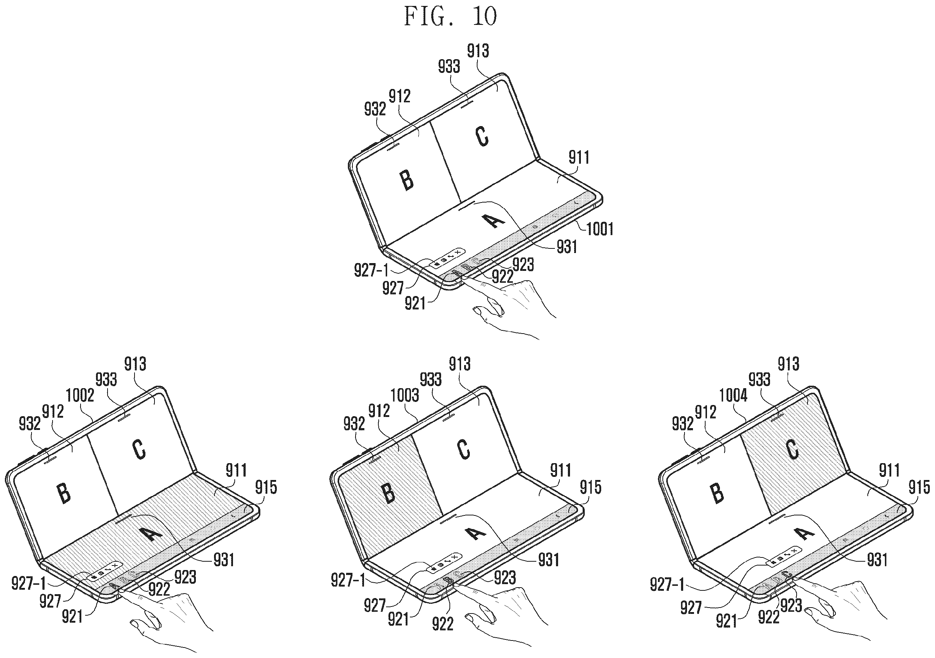

A specific application 939 may be selected through a screen 937 that provides a list of various applications in the multi-window screen 903 of FIG. 9a. The previous application displayed in the selected second window 912 may be switched to the newly selected specific application 939, and the execution screen 942 of the specific application 939 may be displayed through the second window 912 as shown in the multi-window screen 904. FIG. 10 is a diagram illustrating a multi-window control in a flex state of an electronic device according to various embodiments.

According to one embodiment, a processor (e.g., the processor 220 of FIG. 2) of an electronic device (e.g., the electronic device 200 of FIG. 2, the electronic device 300 of FIG. 3, or the electronic device 400 of FIG. 4) may individually control each window (e.g., the first window 911, the second window 912, and the third window 913) of a multi-window screen 1002 through each of the control menus (e.g., the top menus 931, 932, and 933) provided for each window.

According to one embodiment, a control function including selection and control of a specific window 911 and other windows (e.g., the second window 912 or the third window 913) may be performed through a control menu (e.g., the bottom task bar menu 915) provided through any area of a multi-window screen 1002.

With reference to FIG. 10, a control function for a specific window 911 and another window (e.g., the second window 912 or the third window 913) may be performed through a control menu provided through a specific location on the screen (e.g., the bottom screen located at the bottom in a flex state of the display) among multiple windows of a multi-window screen 1002 or an area that overlaps or does not overlap with a specific window (e.g., the first window 911).

According to one embodiment, the multi-window screen 1002 may provide a control menu for controlling each individual window (e.g., the first window 911, the second window 912, or the third window 913) through an area that overlaps or does not overlap with a specific window (e.g., the first window 911).

According to one embodiment, when the electronic device is identified to be in a flex state, the multi-window screen 1001 provided through the flex state display may provide individual window selection icons 921, 922, and 923 for individually selecting individual windows for each of the lower window (the first window 911) folded in the intermediate state and the two upper windows (the second window 912 and the third window 913) through an area at the bottom of the display (e.g., the task bar 915).

According to one embodiment, when a selection menu 921 of a lower window (the first window 911) is selected from individual window selection menus (e.g., objects including icons) provided through a control menu (e.g., a task bar 915) at the bottom of a display in a flex state multi-window screen 1002, for example, through a touch input, the lower window (the first window 911) may provide a control menu 927 for controlling the lower window (the first window 911) through an area overlapping or not overlapping with the lower window (the first window 911) of the display.

When the lower window 911 is selected through the window selection menu 921, the control menu 927 provided through the lower window 911 may provide a function for controlling the lower window 911. For example, when the lower window 911 is selected through the window selection menu 921, the control menu 927 provided through the lower window may include an application switching object 927-1 for executing a function for switching an application running in the lower window 911.

According to one embodiment, when a lower window 911 is selected through a window selection menu 921, the selected lower window 911 may be activated (focused) and displayed to be distinguished from other windows by a color, an image effects, and/or a text to indicate that the window 911 is selected.

When a touch event for one (e.g., 912) of the multi-windows 1002 or a touch input for an individual window selection icon 922 for selecting the corresponding window on the task bar is detected, the window to be activated may be changed. Accordingly, the focus moves so that the newly selected window 912 is activated (focused), and the selected window 912 may be displayed to be distinguished from other windows by a color, an image effects, and/or a text as shown in the multi-window screen 1003, thereby indicating that the window 912 is selected. According to one embodiment, when a window selection menu 922 for the upper left window (the second window 912) is selected, for example, through a touch input, from the window selection menus provided through the lower window (the first window 911) in a multi-window screen 1003 in a flex state, the lower window (the first window 911) may provide a control menu 927 for controlling the upper left window (the second window 912) through an area overlapping with the lower window (the first window 911) or another area that does not overlap, for example, in a floating or pop-up form. When the upper left window 912 is selected through the window selection menu 922, the control menu 927 provided through the lower window may provide a function for controlling the upper left window 912. For example, when the upper left window 912 is selected through the window selection menu 922, the control menu 927 provided through the lower window 911 may include an application switching object 927-1 for executing a function of switching the application running in the upper left window 912.

According to one embodiment, when a window selection menu 923 for the upper right window (the third window 913) is selected through, for example, a touch input from the window selection menus provided through the lower window (the first window 911) in a multi-window screen 1004 in a flex state, the lower window (the first window 911) may provide a control menu 927 for controlling the upper right window (the third window 913) through the lower window (the first window 911). When the upper right window 913 is selected through the window selection menu 923, the control menu 927 provided through the lower window 911 may provide a function for controlling the upper right window 913. For example, when the upper right window 913 is selected through the window selection menu 923, the control menu 927 provided through the lower window 911 may include an application switching object 927-1 for executing a function of switching the application running in the upper right window 913.

With reference to FIG. 9a again, in a situation where an individual window selection icon 922 for selecting the upper (a) left window (the second window 912) is selected and the upper (a) left window 912 is selected, when an application switching object 927-1 is selected among the control menus 927 for the upper (a) left window 912 provided through an area overlapping with the lower (b) window 911, a screen 937 including selectable objects representing selectable applications may be provided.

According to one embodiment, when the processor 220 detects an input for selecting a window 912 through a touch input or a selection menu 922 provided through another window 911 for at least one area of a window 912 from a user on a multi-window screen 902 as a touch event, the processor 220 may provide a control menu 927 for the selected window 912 on the display in a floating or pop-up form. The processor 220 may detect a user input for selecting one of the control menus 927 for the selected window 912 (e.g., the application switching object 927-1).

According to one embodiment, the processor 220 may control the display to display a window 937 including selectable objects (e.g., the icons or folders) for executing various applications for application switching by touch events, for example, in a pop-up form, on the multi-window screen 903.

According to one embodiment, when a selection menu 922 for selecting a second window 912 is input, for example, by touch, and an application switching function for the second window 912 is selected, a window 937 including selectable objects for selecting an application that can be executed through the second window 912 may be provided on the multi-window screen 903 of the display. The window 937 including selectable objects for selecting an application may be displayed on an upper layer of the multi-window screen 903, for example, in a pop-up form. The window 937 including selectable objects for selecting an application may be provided, for example, through a specific window (e.g., the first window 911) among multiple windows. The window 937 including selectable objects for selecting an application may be displayed, for example, in a pop-up form on an upper layer of the specific window (e.g., the first window 911) among multiple windows.

A window 937 including selectable objects for executing various applications may include selectable objects identical or similar to the home screen and may include a screen having an identical or similar disposition structure. For example, selectable objects displayed on the window 937 may be provided as selectable objects identical or similar to the home screen constructed by the user and having an identical or similar disposition structure.

According to one embodiment, the processor 220 may detect that one object 939 (e.g., the D application icon) among selectable objects (e.g., the icons) for executing various applications is selected by various touch methods, such as touch input or drag-and-drop.

According to one embodiment, with reference to the multi-window screen 904, an application (e.g., the D application) corresponding to the selected object 939 may be executed, and the executed application screen 942 may be displayed on the selected window 912. Accordingly, the application displayed on the window 912 may be switched or changed to another application.

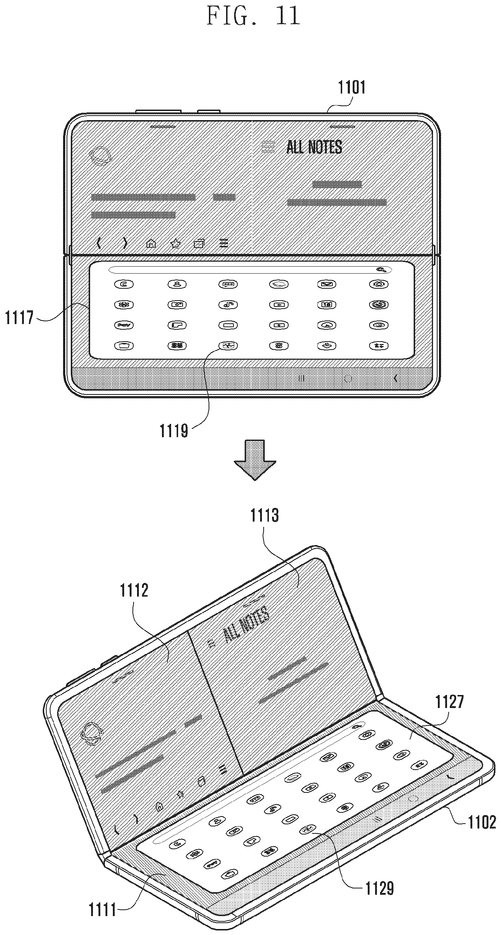

FIG. 11 is a diagram illustrating a pop-up window including selectable objects for executing an application of an electronic device according to various embodiments.

With reference to FIG. 11, a processor (e.g., the processor 220 of FIG. 2) of an electronic device (e.g., the electronic device 200 of FIG. 2, the electronic device 300 of FIG. 3, or the electronic device 400 of FIG. 4)) may display a multi-window configured such that the entire screen of a display (e.g., the display 210 of FIG. 2 or the display 410 of FIG. 4) is partitioned into multiple sub-screens and individual information is provided through each sub-screen.

According to one embodiment, the processor 220 may provide a menu for controlling an application displayed in a corresponding window according to a touch event corresponding to one of the multi-windows.

In one embodiment, a touch event corresponding to any one of the multiple windows may include one or more touch inputs to the corresponding window, one or more touch inputs to a menu for controlling the corresponding window, or a combination thereof.

According to one embodiment, the processor 220, in response to a touch event, when an application switching function is selected by a touch event for a window corresponding to one of the multi-windows on the multi-window screen 1101 displayed on the display of the electronic device in an unfolded state, may enable a window 1117 including selectable objects (e.g., icons) 1119 for executing various applications for application selection to be displayed on the multi-window screen 1101. For example, the window 1117 including selectable objects for executing various applications may be displayed on an upper layer of the multi-window screen 1101, for example, in a pop-up form. For example, the window 1117 including selectable objects for executing various applications may include selectable objects that are identical or similar to a home screen and may include a screen having an identical or similar disposition structure. For example, the selectable objects displayed on the window 1117 may be selectable objects that are identical or similar to a home screen built by a user and may be provided with an identical or similar disposition structure.

According to one embodiment, when an application switching function is selected by a touch event corresponding to one of multiple sub-windows 1111, 1112, and 1113 of the multi-window screen 1102 displayed on a display of an electronic device in a flex state in response to a touch event, a window 1127 including selectable objects 1129 for selecting an application that can be executed through the window 1113 may be provided on the display. The window 1127 including selectable objects for selecting an application may be displayed through one window of the multi-window screen (e.g., the lower window 1111). The window 1127 including selectable objects for selecting an application, for example, may be displayed on an upper layer of the lower window 1111 in a pop-up form.

A window 1127 including selectable objects for executing various applications may include selectable objects identical or similar to a home screen and may include a screen having an identical or similar disposition structure. For example, selectable objects displayed on the window 1127 may be selectable objects identical or similar to a home screen built by a user and may be provided with an identical or similar disposition structure.

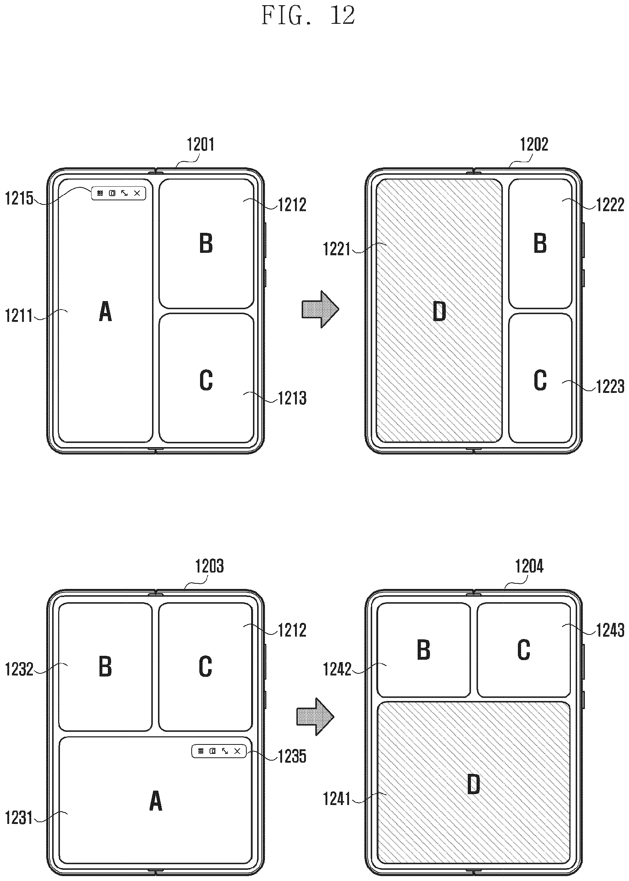

FIG. 12 is a diagram illustrating a multi-window control of an electronic device according to various embodiments.

With reference to FIG. 12, a processor (e.g., the processor 220 of FIG. 2) of an electronic device (e.g., the electronic device 200 of FIG. 2, the electronic device 300 of FIG. 3, or the electronic device 400 of FIG. 4) may display a multi-window configured to partition the entire screen of a display (e.g., the display 210 of FIG. 2 or the display 410 of FIG. 4) into multiple sub-screens and provide individual information through each sub-screen. For example, a display screen 1201 may provide a multi-window composed of three sub-screens. For example, the display may display a multi-window partitioned into three: a window 1211, a window 1212, and a window 1213.

According to one embodiment, the processor 220 may control display of one (e.g., window 1211) of the multi-windows according to a touch event corresponding to the corresponding window. For example, the processor 220 may display a control menu (e.g., the multi-window handler) 1215 for controlling the window 1211 according to a touch event corresponding to the window 1211.

According to one embodiment, the processor 220 may provide a menu for selecting an application to be displayed in a window (e.g., window 1211) on the basis of a touch event corresponding to one of the multi-windows.

According to one embodiment, the processor 220 may change an application (A) previously displayed on a window 1211 to another selected application (D) through a menu for selecting an application displayed on a window (e.g., the window 1211) on the basis of a touch event corresponding to one (e.g., the window 1211) on a multi-window screen 1201.

According to one embodiment, the processor 220 may may identify attribute information for another application (D) when another application (D) is selected according to the application switching function for the corresponding window 1211. For example, the application attribute information may include various application-related information such as the type of the corresponding application (e.g., messenger application, video application, or Internet application), package name, execution status (e.g., pause or resume), or application screen configuration information (e.g., aspect ratio, or screen size).

According to one embodiment, the processor 220 may identify application-related information, for example, screen configuration information, of another application (D) that is switched in a window 1211 displaying an execution screen of an application (A), and may modify the size of the window 1221 displaying an execution screen of another application (D), for example, a horizontal or vertical screen ratio, and display the same according to the identified screen configuration information. According to the application switching of the window 1211, the window 1211 in the multi-window screen 1202 may be changed to a window 1221 having a different screen ratio (for example, the screen ratio of the D application) that displays the execution screen of another application (D), and the existing other windows 1212 and 1213 may also be changed to windows 1222 and 1223 having different screen ratios.

According to one embodiment, the screen configuration information (e.g., the screen ratio and/or size) may be information that is previously stored as application property information. For example, in the case of a video application, if it is produced with an aspect ratio of 21:9 and the screen configuration according to this is not supported, the screen may be configured with a letter box (black screen) to a 16:9 ratio or the vertical length may be reduced while maintaining the number of pixels, which may cause the resolutions not to match. For example, a game may be configured with an aspect ratio of 16:9 and if the screen configuration is not supported, black boxes may be added to both sides of the screen as filler boxes (letter boxes) on a 21:9 screen, which may cause the resolutions not to match the aspect ratio or may hinder efficient use of the display screen.

According to one embodiment, the processor 220 may display a control menu (e.g., the multi-window handler) 1235 including a menu for selecting an application to be executed in a window (e.g., the window 1231) according to a touch event corresponding to one (e.g., the window 1231) in a multi-window screen 1203. Through the menu for selecting an application included in the control menu 1235, an application (A) previously displayed in the window 1231 may be changed to another selected application (D).

According to one embodiment, the processor 220 may identify the attribute information for another application (D) when another application (D) is selected according to the application switching function for the corresponding window 1231. For example, the application attribute information may include various application-related information such as the type of the corresponding application (e.g., messenger application, video application, Internet application), package name, execution status (pause, resume), or application screen configuration information (e.g., aspect ratio, screen size).

According to one embodiment, the processor 220 may identify application-related information, for example, screen configuration information, of another application (D) that is switched in the window 1231 displaying the application (A), and may modify and display the size of the window 1241 displaying the other application (D), for example, the horizontal or vertical screen ratio, according to the identified screen configuration information. In identifying the size of the window 1241 displaying the other application (D), for example, the horizontal or vertical size or ratio, the processor 220 may consider the size of the area 1231 occupied by the target application (A) in the multi-window screen 1203, for example, the horizontal or vertical length and ratio. For example, when the horizontal length of the area 1231 occupied by the application (A) is identified, the vertical length of the window 1241 displaying the other application (D) that is switched, as in the multi-window screen 1204, may be adjusted to modify the screen ratio. In contrast, in the cases where the vertical length of the area 1211 occupied by the application (A) is identified, as in the multi-window screen 1201, the screen ratio may be modified by adjusting the horizontal length of the window 1221 that displays another application (D) that is switched, as in the multi-window screen 1202.

According to the application switching of the window 1231, the screen ratio of the window 1231 displaying the application (A) in the multi-window screen 1203 may be changed to the screen ratio of displaying another application (D) in the window 1241, and accordingly, the other windows 1232 and 1233 may also be changed to windows 1242 and 1243 of different screen ratios.

According to one embodiment, the screen configuration information may be stored in a memory (e.g., the memory 230 of FIG. 2) as screen configuration information including a screen ratio and/or size according to a previous execution history. For example, when there is information according to a previous execution history, the screen configuration information may be applied first, and when the screen configuration information is configured as application property information, the information may be applied second, but the present disclosure is not limited thereto and the priority may be changed and applied.

According to one embodiment, when the processor 220 cannot identify application-related information, such as screen configuration information, of another application (D) switched from a window 1211 displaying an application (A), the processor 220 may configure and/or display a multi-window according to a default configuration or a previously configured multi-window screen border line.

An electronic device according to various embodiments (e.g., the electronic device 200 of FIG. 2, the electronic device 300 of FIG. 3, or the electronic device 400 of FIG. 4) may include a housing (e.g., the housing 401 and/or 402 of FIG. 4), a display (e.g., the display 210 of FIG. 2) mounted in the housing, a sensor module (e.g., the sensor module 240 of FIG. 2), and a processor (e.g., the processor 220 of FIG. 2) operatively connected to the display and the sensor module, wherein the processor displays a multi-window including multiple windows by partitioning the display screen, identify a state of the electronic device on the basis of a sensor value of the sensor module, display an object for selecting one of the multiple windows in a designated area of the display screen on the basis of the state of the electronic device, identify whether a first window of the multiple windows is selected through the object displayed in the designated area, identify whether the first window is selected and an application switching function is selected, and, if the application switching function is selected, execute at least one application. A second window including a selectable object may be provided on the display, and an application corresponding to a specific object selected in response to a specific object displayed in the second window may be executed, and the application execution screen may be displayed on the selected first window.

According to various embodiments, the object displayed in the designated area may be configured to include multiple icons corresponding to each of the multiple windows.

According to various embodiments, the processor may be configured to change at least one of a color, an image effect, and a text of the first window to display it so as to be distinguished from other windows when the first window is identified to be selected.

According to various embodiments, the processor may be configured to provide the second window in a floating form or a pop-up form on the multi-window.

According to various embodiments, the designated area may be configured to include a lower edge area of the display.

According to various embodiments, the processor may be configured to provide, through the designated area, a control menu including an object for selection of the application switching function.

According to various embodiments, the housing may include a first housing and a second housing rotatable relative to the first housing, the display may include a first area corresponding to the first housing and a second area corresponding to the second housing, and the processor may be configured to provide an object for selecting the first window through an area overlapping with a third window displayed in the first area when the state of the electronic device is identified on the basis of a sensor value of the sensor module such that the first housing is substantially horizontal to a floor surface, the second housing is folded at an angle within a specified range with respect to the first housing, and the first window is identified to be displayed in the second area.

According to various embodiments, the processor may be configured to provide a control menu including an object for selection of the application switching function through an area overlapping with the third window when the first window is selected through the object displayed in the designated area.

According to various embodiments, the processor may be configured to provide the second window in a floating form or a pop-up form through an area overlapping with the third window when an object for selection of the application switching function is selected.

According to various embodiments, the processor may be configured to identify information related to the application corresponding to the specific object, and adjust the screen ratio of the first window displaying the application execution screen on the basis of the information.

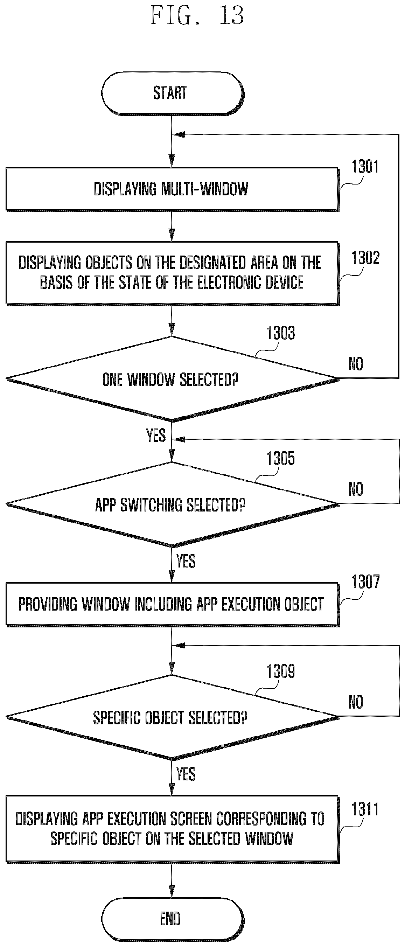

FIG. 13 is a flowchart illustrating a multi-window control operation of an electronic device according to various embodiments.

With reference to FIG. 13, a processor (e.g., the processor 220 of FIG. 2) of an electronic device (e.g., the electronic device 200 of FIG. 2, the electronic device 300 of FIG. 3, or the electronic device 400 of FIG. 4)) may, in operation 1301, display a multi-window configured to partition the entire screen of a display (e.g., the display 210 of FIG. 2 or the display 410 of FIG. 4)) into multiple sub-screens and provide individual information about each of multiple applications running through each sub-screen. The multi-window screen may include, for example, multiple windows partitioned into two or more.

According to one embodiment, the processor 220 may, in operation 1302, identify a state of the electronic device on the basis of a sensor value received from a sensor module (e.g., the sensor module 240 of FIG. 2), and, on the basis of the identified state of the electronic device, display an object for selecting one of the multiple windows on a designated area of a display screen. For example, if the state of the electronic device is a flex state, an object for selecting one of the multiple windows may be displayed at the bottom of a screen located on the bottom surface.

According to one embodiment, the processor 220 may identify which window among the multi-windows is selected in operation 1303. One of the multi-windows may be selected, for example, according to a touch event designating the one window. The processor 220 may provide a control menu for controlling the selected window in response to the selection of one of the multi-windows. The touch event designating one of the multi-windows may include one or more touch inputs for the corresponding window, one or more touch inputs through a menu for controlling the corresponding window, or a combination thereof.

According to one embodiment, the processor 220 may identify whether the application switching function is selected in operation 1305. For example, the application switching function may be selected through a control menu provided to control one of the selected windows among the multi-windows. For example, the application switching function may be selected through a touch event on one of the control menus (e.g., the application switching object 627-1 of FIG. 6).

According to one embodiment, the processor 220 may provide a window on the display including selectable objects (e.g., icons) for execution of various applications for application switching in operation 1307. The window including selectable objects for execution of various applications may be displayed in an upper layer on a multi-window screen, for example, in a pop-up form. The window including selectable objects for execution of applications may be displayed in an upper layer on one window or another window among the multi-windows, for example, in a pop-up form. The window including selectable objects for execution of various applications may include selectable objects that are the same as or similar to a home screen and may include a screen having the same or similar disposition structure.

In one embodiment, the processor 220 may identify in operation 1309 whether one of the selectable objects for executing various applications is selected. The selectable objects may be selected by various touch methods, such as touch input or drag-and-drop.

According to one embodiment, the processor 220 may execute an application corresponding to a specific object selected in operation 1311 and display an application execution screen in the selected window. Accordingly, information displayed in the selected window may be switched from previous application execution screen information to newly selected application execution screen information.

The embodiments disclosed in this document are merely presented as examples to easily explain the technical content and help understanding, and are not intended to limit the scope of the technology disclosed in this document. Therefore, the scope of the technology disclosed in this document should be interpreted to include all changes or modifications derived on the basis of the technical ideas of various embodiments disclosed in this document in addition to the embodiments disclosed herein.

## Claims

1. **2.** An electronic device comprising:
a housing;
a display mounted in the housing;
a sensor module; and
a processor operatively connected to the display and the sensor module, wherein
the processor is configured to:
display a multi-window including multiple windows by partitioning the display screen;
identify a state of the electronic device on the basis of a sensor value of the sensor module;
display an object for selecting one of the multiple windows on a designated area of the display screen on the basis of the state of the electronic device;
identify whether a first window of the multiple windows is selected through the object displayed on the designated area;
identify whether the first window is selected and an application switching function is selected;
provide a second window including a selectable object for executing at least one application on the display if the application switching function is selected;
in response to selection of a specific object displayed on the second window, execute an application corresponding to the specific object; and
display the application execution screen on the selected first window.

2. The electronic device of claim 1, wherein
the object displayed in the designated area is configured to include multiple icons corresponding to each of the multiple windows.

3. The electronic device of claim 2, wherein
the processor is configured to change at least one of a color, an image effect, and a text of the first window to display it so as to be distinguished from other windows when the first window is identified to be selected.

4. The electronic device of claim 1, wherein
the processor is configured provide the second window in a floating form or a pop-up form on the multi-window.

5. The electronic device of claim 1, wherein
the designated area is configured to include the lower edge area of the display.

6. The electronic device of claim 1, wherein
the processor is configured to provide a control menu including an object for selection of the application switching function through the designated area.

7. The electronic device of claim 1, wherein
the housing comprises a first housing and a second housing rotatable relative to the first housing;
the display comprises a first area corresponding to the first housing and a second area corresponding to the second housing; and
the processor is configured to provide an object for selecting the first window through an area overlapping with a third window displayed in the first area when the state of the electronic device is identified on the basis of the sensor value of the sensor module such that the first housing is substantially horizontal to the floor surface, the second housing is folded at an angle within a specified range with respect to the first housing, and the first window is identified to be displayed in the second area.

8. The electronic device of claim 7, wherein
the processor is configured to provide a control menu including an object for selecting the application switching function through an area overlapping with the third window when the first window is selected through the object displayed in the designated area.

9. The electronic device of claim 8, wherein
the processor is configured to provide the second window in a floating form or a pop-up form through an area overlapping with the third window when an object for selection of the application switching function is selected.

10. The electronic device of claim 1, wherein
the processor is configured to identify information related to the application corresponding to the specific object and adjust the screen ratio of the first window displaying the application execution screen on the basis of the information.

11. A method of an electronic device, the method comprising:
displaying a multi-window including multiple windows by partitioning a display screen of the electronic device;
identifying a state of the electronic device on the basis of a sensor value of the sensor module of the electronic device;
displaying an object for selecting one of the multiple windows in a designated area of the display screen on the basis of the state of the electronic device;
identifying whether a first window among the multiple windows is selected through the object displayed in the designated area;
identifying whether the first window is selected and the application switching function is selected;
providing a second window including a selectable object for executing at least one application on the display if the application switching function is selected;
in response to selection of a specific object displayed in the second window, executing an application corresponding to the specific object; and
displaying the application execution screen on the selected first window.

12. The method of claim 11, wherein
the object displayed in the designated area comprises multiple icons corresponding to each of the multiple windows.

13. The method of claim 12, further comprising changing at least one of a color, an image effect, and a text of the first window to distinguish it from other windows when the first window is identified to be selected.

14. The method of claim 11, wherein
providing the second window is providing the second window in a floating form or a pop-up form on the multi-window.

15. The method of claim 11, wherein
the designated area comprises a lower edge area of the display.
